# EUROPEAN PATENT SPECIFICATION

(11) **EP 3 099 515 B1**
(45) Date of publication and mention of the grant of the patent: **11.03.2020**
(21) Application number: 15710939.8
(22) Date of filing: 02.02.2015
(51) Int. Cl.: B60C 7/28, B60C 7/10, B60C 15/02, B60C 7/22, B60C 7/24

(54) **MASSIVE TIRE WITH PULL CABLE**
FESTER REIFEN MIT ZUGKABEL
PNEU SOLIDE AYANT UN CÂBLE DE TRACTION

(30) Priority: 31.01.2014 NL 1040643
(43) Date of publication of application: 07.12.2016
(73) Proprietor: Van Den Haak, Neil Johannes, 2377 DK Oude Wetering (NL); Kesteloo, Kevin Sascha, 1764 HS Breezand (NL)
(72) Inventor: Van Den Haak, Neil Johannes, 2377 DK Oude Wetering (NL); Kesteloo, Kevin Sascha, 1764 HS Breezand (NL)
(74) Representative: Hubregtse, Teunis
(86) International application number: PCT/NL2015/050068
(87) International publication number: WO 2015/115902

(56) References cited:
- CH-A- 237 713
- CN-U- 203 267 670
- GB-A- 151 473
- US-A- 733 158
- US-A- 2 108 406

## Description

The invention relates to a tire, in particular to, but not restricted to, a bicycle tire, equipped to be mounted around a wheel rim.

Bicycle tires usually are pneumatic tires, having a hollow inflatable inner tube and an outer casing that can be mounted around the front and the rear wheel of the bicycle. It is generally known that pneumatic tires can run flat, which is inconvenient for the bicycle user. It is true that the driving and suspension characteristics of a pneumatic tire are outstanding.

Among other things in view of the environment, the use of bicycles, in particular in big cities, is increasingly propagandized. In that context companies arise having large numbers of bicycles for rent. It is clear that having to repair the tires of these rental bikes regularly is annoying for the rental company's business.

It has been tried to solve this problem by providing non-pneumatic tires. From CH46515A a massive, i.e. a non-pneumatic, tire is known, built from juxtaposed massive elements, tied together with massive rods extending in a channel close to the inner circumference of the tire.

This known tire, however, has the disadvantage that it fits only to the rim of one specific wheel. Aim of the invention is to provide a tire that will fit to wheel rims in a broad range of sizes and widths.

The invention now provides a tire, comprising an annular massive tire body having an essentially round or oval cross section having a centre M_{B}, and having an outer circumference Co forming a tread and an inner circumference C_{I} facing the centre of the annular body, the body containing a longitudinal pull cable channel having a cross section having a centre M_{K}, the channel containing a pull cable, and wherein the distance between centre M_{K} and the inner circumference C_{I} is between 7 and 18 mm measured along a line connecting M_{K} and M_{B}.

The tire according to the invention is massive, i.e. the tire is a non-pneumatic tire and the tire body consists of an elastic and resilient material in order to provide good suspension and driving characteristics. Suitable resilient and flexible materials are for example rubber and polymeric elastomers. Preferably the material is a closed-cell foam made of the resilient material.

The tread may be provided with a profile to enhance the driving characteristics, in particular preventing the bike it is mounted on from slipping. Suitable tire profiles for various types of bicycles are known *per* se in the art.

The tire body has an essentially round or oval cross section. Depending on the type of bicycle the cross section may locally deviate from a true round or oval shape, e.g. the tread formed by the outer circumference for a racing bicycle will be narrower than for a touring bicycle.

The body contains a longitudinal pull cable channel. The channel is equipped for leading through a pull cable intended for tightening the tire body to the rim of a wheel on mounting. The position of the pull cable channel within the tire body is chosen such that the distance between centre M_{K} and the inner circumference Ci is between 7 and 20 mm measured along a line connecting M_{K} and M_{B}. Preferably the distance between centre M_{K} and the inner circumference Ci is between 8 and 16 mm.

The pull cable channel does not only serve to guide the pull cable, but it may also affect properties of the tire such as driving and suspension characteristics. The volume of the tire channel may be larger than the minimal volume required to contain the guide cable. Usually, the volume of the channel is at most 25 vol. % of the total volume of the tire. Preferably, it is between 1 and 15 vol.%.

The invention thus provides a tire, equipped for being mounted around a wheel rim having a rim bottom outer diameter D_{Vb} and rim edges having a rim edge outer diameter Dvr.

The tire comprises an annular tire body which, apart from the annular cable channel, is substantially massive, so filled with the resilient and elastic material. The cable channel is equipped for leading through the pull cable intended for tightening the tire body to the rim on mounting. Preferably, the inner diameter D_{B} of the inner circumference C_{I} of the tire is at most 5% larger than the rim bottom outer diameter D_{Vb} but preferably it is at least equal to and more preferably it is up to 3 % smaller than D_{Vb} of the rim the tire will be mounted on. When having been mounted on the rim the tire will have been drawn into the rim until it meets the rim bottom or a annular hollow cavity may remain between the rim and the rim bottom. This cavity may extend up to 15, preferably up to 10 mm above the rim bottom.

To obtain a firm connection of the tire to a rim, in tensioned position the position of M_{K} will range from 10 mm above the rim bottom to 5 mm above the rim edge.

In cross sectional view, the distance between M_{K} and the inner circumference C_{I} is between 7 and 20 mm, preferably between 8 and 18 mm, measured along a line connecting M_{K} and M_{B}. Suitable positions of the pull cable channel are determined by the resilience and elasticity of the tire body. The more resilient and elastic the material of the tire body, the higher the percentage defined in the preceding paragraph can be chosen.

When mounting the tire, it is positioned on the rim edges ("shoulders") of the rim. The elasticity of the tire body allows to do so even although the diameter of the inner circumference may be smaller than the rim outer diameter. With the aid of a tensioning system (*e.g.* as known *per se* from GB181473 and DE336054) the elastic material of the tire body is drawn into the rim, *i.e.* between the rim edges, by the (internal) pull cable. Since the tire body is of elastic material, the tire can deform in conformity to a large variety of rim shapes and rim widths. For example, the different rims on which a tire of the invention can suitably mounted may have widths ranging a factor of two. For example, one type of tire is fit rims having a width in the range 16-32 mm

Thus, according to the invention, use can be made of one universal tire, i.e. one tire size for various rim widths and shapes, which is also advantageous for the large rental companies' businesses.

Depending on the depth of the rim in relation to the position of the pull tire channel and the elasticity of the tire material, after tensioning the pull cable, a hollow cavity may remain between the inner circumference C_{I} of the tire and the rim bottom. This cavity may enhance the suspension and driving characteristics of the tire. In particular, it can absorb shocks due to a collision with a sharp edge of an object (e.g. a curb), because the tire then is pressed into the cavity.

The pull cable is tensioned to the extent that the pull cable is in a position below the edges of the rim or at most 5 mm above the edges. With tensioned pull cable the tire is securely fixed to the rim and without releasing the pull cable it will be impossible to remove the tire from the rim. Preferably, the pull cable channel has a reinforced wall. For example the reinforced wall comprises a hollow wound metal wire spiral, as used e.g. in Bowden cables. The presence of a metal wire spiral eases the sliding of the cable through the cable channel. Also the application of a lubricant can ease the tensioning of the pull cable.

The pull cable channel is provided with a hole radially extending to an opening in the inner circumference. Through this opening the ends of the tire cable are passed to outside the tire in a radial direction and joined.

Preferably both ends of the tire cable are fed through a hollow threaded end and fastened to the threaded end.

In general a rim contains an opening for mounting the valve of a pneumatic tire. When mounting the tire according to the invention on a rim, the opening in the inner circumference of the tire is aligned with said opening in the rim, and the threaded end, containing the cable ends, is passed through the aligned openings. Preferably the size of the threaded end is smaller than the diameter of the opening in the rim. In practice an M6 threaded end is suitable for the commonly applied rims.

The tire then can be tightened to the rim by pulling the threaded end through the opening in the rim thus tensioning the pull cable.

The tire preferably contains a T-shaped element through which the ends of the pull cable are guided from the cable channel into the protruding leg of the element to outside the tire body. The T-shaped element prevents the mounted tire from sliding over the rim, *i.e.* it prevents rotation of the tire over the rim in the direction of normal rotation of the tire, for example during acceleration or deceleration. Such sliding will cause irregularities in the tire which makes riding the bike unpleasant.

As an additional effect the presence of a T-shaped element protects the tire from being damaged by the tensioning action of the cable, e.g. from being cut in by the pull cable. Another way to diminish the risk of damaging the tire, in particular the pull cable channel, is the use of a cable of a smooth material or a cable clad with a smooth material, e.g. silicon rubber.

In a preferred embodiment of the tire according to the invention this T-shaped element is incorporated by moulding it in the tire during the manufacturing process of the tire.

The tire is particularly useful for being mounted on a rim to manufacture a wheel. The invention further relates to a tire containing a T-shaped element, the tire having been mounted on a rim containing a valve hole, the ends of the pull cable having been secured to the rim through the valve hole.

In an alternative embodiment the pull cable has the shape of a screw clamp. Such clamp comprises a, usually metal or plastic, band that is tightened by turning a captive screw having a screw thread. Into the band a grooved pattern has been cut or pressed corresponding to the screw thread of the captive screw. By turning the captive screw the band becomes narrower. The band and the captive screw can be positioned in the pull cable channel, which in this embodiment usually will be just large enough to contain the band . The wall of the tire body then is provided with a hole giving access to the captive screw, which allows the tire to be tightened to the rim by turning the captive screw through the hole in the tire body.

Preferably, the hole and the screw are positioned in such a way in the tire body that a screwdriver, Allen key or other key matching the screw head accessing the screw for rotating it, can be positioned obliquely into the side wall, preferably close to perpendicular to the side wall. This allows a convenient tightening of the tire around the rim. Moreover, this positioning of the screw allows easy access of an electric screwdriver to the screw, making the tightening even more convenient and fast.

Applying a screw clamp as the tire cable has the advantage that it is not necessary to fix the tire with respect to the rim since sliding of the tier along the rim will not cause irregularities. In addition to the screw clamp the tire may contain a T-shaped element to fix the position of the tire on the rim. In such case, the T-shaped element is not necessary to guide the pull cable and may therefore also have a massive shape structure that does not have space to allow a cable to be guided through.

The tire according to the invention in practice will be applied, mounted on a wheel rim. The invention thus further relates to a structure comprising a tire as described above, mounted around a wheel rim, having a rim bottom having a rim bottom outer diameter D_{Vb} and rim edges having a rim edge outer diameter D_{Vr}, which tire comprises an annular tire body which, apart from a narrow annular cable channel, is substantially massive, which cable channel is equipped for leading through a pull cable intended for tightening the tire body around to the rim on mounting, the cross section of the substantially massive tire body, when the pull cable is in non-tightened position, being essentially round or oval and the inner diameter D_{B} of the tire body, when the pull cable is in non-tightened position, being substantially but preferably at most 5% larger than the rim bottom outer diameter D_{Vb}.

The invention further relates to a structure comprising a tire as described above, comprising an annular massive tire body, mounted around a wheel rim having a rim bottom having a rim bottom outer diameter D_{Vb} and rim edges having a rim edge outer diameter D_{Vr}, wherein the annular tire body contains an annular cable channel, which cable channel contains a tensioned pull cable that tightens the tire body around to the rim and wherein the inner diameter D_{B} of the tire body ranges from the rim bottom outer diameter D_{Vb} up to 1 to 5 mm larger than the rim bottom outer diameter D_{Vb}.

In a preferred embodiment the rim bottom has a valve hole and the ends of the pull cable are secured to the rim through the valve hole.

In a further preferred embodiment the pull cable has been tightened around the rim by the screw clamp as described above. In general the position of the pull cable will range from 10 mm above the rim bottom to 5 mm above the rim edges 3.

The invention will be elucidated by the following exemplary drawings, without being restricted to the shown specific embodiments.

In these drawings:
Fig. 1a-b shows a rim and a tire body of a schematic exemplary embodiment of a tire according to the invention in two stages of mounting it around a rim.
Fig. 1a shows the tire being positioned on the rim, the pull cable being not-tensioned.
Fig. 1b shows the tire having been drawn into the rim by tensioning the pull cable.
Fig. 2a shows a longitudinal cross section of a tire according to the invention at the location of a T-shaped element.
Fig. 2b shows a longitudinal cross section of a tire according to the invention at the location of a T-shaped element with the pull cable mounted.
Fig. 3a shows a longitudinal cross section of a specific embodiment with a screw clamp as the pull cable.
Fig. 3b shows a perspective view of the tension process of the embodiment of Fig. 3a

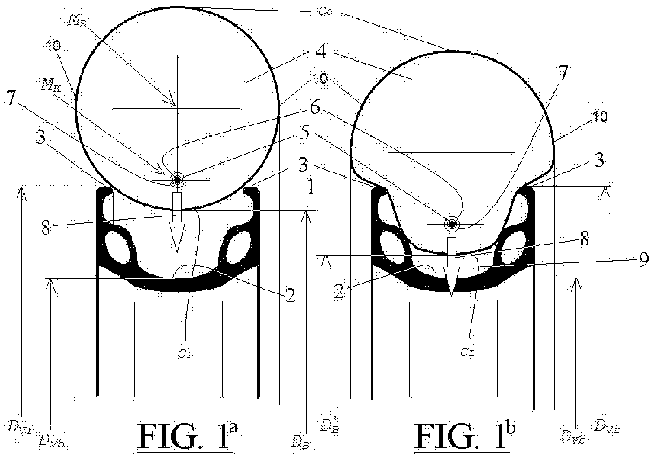

In figure 1a the tire body 4 is positioned on the rim edges 3, of a wheel rim 1 having a rim bottom 2 having a rim bottom outer diameter D_{Vb}, and rim edges 3 having a rim edge outer diameter Dvr. The tire comprises an annular tire body having an outer circumference Co forming a tread, an inner circumference Ci facing the centre of the annular body and side walls 10 connecting the inner and outer circumference. The tire body, apart from a narrow annular pull cable channel 5, is substantially massive. Preferably, as fig. 1a shows, when the pull cable 6 is in non-tightened position, the inner diameter D_{B} of the tire body is smaller than the rim edge outer diameter Dvr.

In Fig. 1b, the pull cable 6 has been tensioned and the inner circumference C_{I} of the tire 4 has been drawn into the wheel rim 1, leaving a small air-filled cavity 9 between C_{I} and the rim bottom 2.

In cross sectional view (as in figures 1a and 1b), the centre M_{K} of the pull cable channel 5 is positioned at a distance within the range defined in the description above.

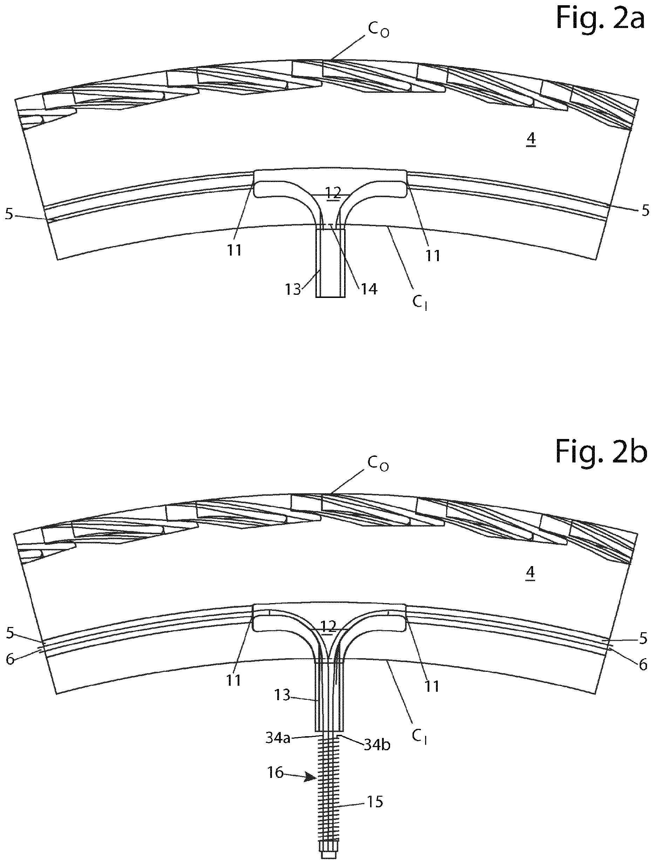

In Fig. 2a Co is the outer circumference of the tire body carried out as a profiled tread. Pull channel 5 connects openings 11 of a T-shaped element 12 having a radially protruding leg 13 extending through opening 14 in inner circumference C_{I}.

In Fig. 2b pull cable 6 has been mounted in pull cable channel 5 , the ends 31a and 31b of the cable 6 extending outside tire 4 through protruding leg 13 of T-shaped element 12. The ends of the cable run through the hollow threaded end 15 and are jointly fastened to this end 15. Threaded end 15 has an external thread 16.

When mounting the tire on a rim, protruding leg 13 is aligned with the valve opening in the rim making threaded end 15 accessible from outside the rim. Threading a nut or other element having an internal thread corresponding with external thread 16 of threaded end 15 , will tension the pull cable. In order to prevent the nut or other element from entering into the valve opening a washer can be placed between rim and nut. The resulting firm connection of the T-shaped element to the rim further stabilizes the position of the tire on the rim.

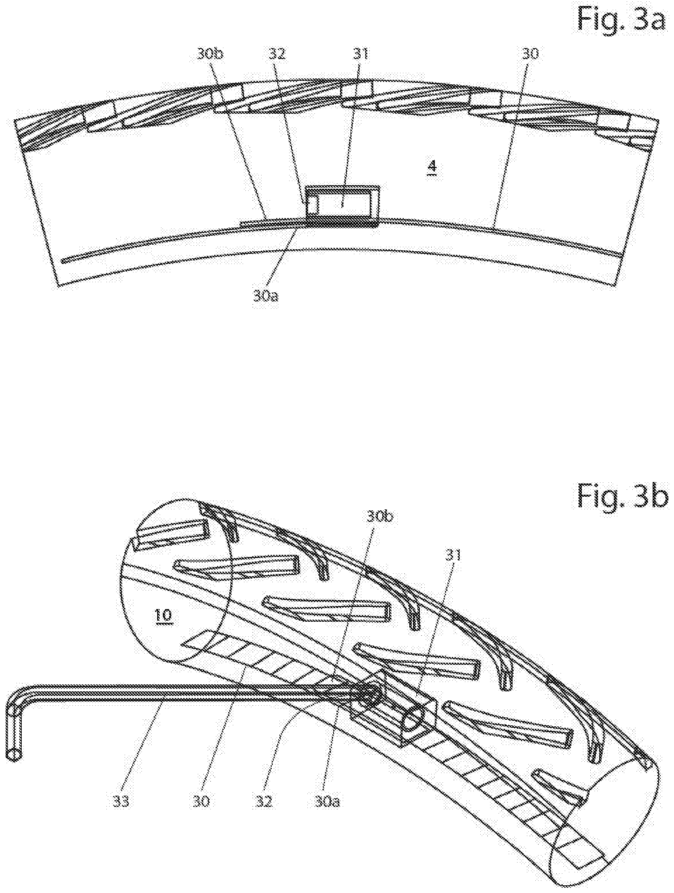

In Fig. 3a as a pull cable a plastic band 30 is shown into which a screw thread pattern has been cut.

31 is a block fastened to end 30a of band 30 and contains captive screw 32. Opposite end 30b of band 30 is lead through block 31 in matching position with end 30a. When captive screw 32 is turned around end, 30b is moved with respect to end 30a thus tightening band 30.

In Fig. 3b Allen key 33 accesses captive screw 32 through an opening in tire wall 10 to rotate screw 32 thus fastening band 30.

It is noted:
- that there is preferably one tire size for different rim widths, making the proposed configuration very suitable for the consumer aftermarket;
- that the proposed tire in particular has been developed as a bicycle tire but can also be used for wheel chairs, prams and wheel barrows etc.;
- that the pull cable after having been tensioned is positioned below or at most slightly above the rim edges, so that the tire cannot come off the rim;
- that the tire during the tensioning of the pull cable deforms in conformity with the type of rim and/or the rim width and shape.

Thus the invention provides a tire which, since it is massive, cannot run flat, which can be reliably mounted on the rims and which can be used for rims having different shapes and having different rim edge width an height sizes. In particular the tire according to the invention is useful for companies having large numbers of bicycles for rent, where the present invention will have an advantageous effect on the business of such (large) bicycle rental companies, having its impact on the popularity of rental bicycles, in particular in crowded urban areas (for example Chinese big cities) and thus on the growth of their use as replacement of car use.

The tire can also be advantageously used by private bicycle owners when they need to replace a tire. Due to the large range of rim dimensions the tire can be applied they do not have to bother about the specific wheel size of their bicycle. Also mounting and maintenance is easy.

## Claims

1. Tire, comprising an annular massive tire body (4) having an essentially round or oval cross section having a centre M_{B}, and having an outer circumference C_{O} forming a tread and an inner circumference C_{I} facing the centre M_{B} of the annular body, the body containing a longitudinal pull cable channel (5), the channel containing a pull cable (6) and having a cross section having a centre M_{K}, **characterized in that** the distance between M_{K} and the inner circumference C_{I} is between 7 and 20 mm measured along a line connecting M_{K} and M_{B}.

2. Tire according to claim 1, **characterised in that** the distance between M_{K} and the inner circumference C_{I} is between 8 and 18 mm.

3. Tire according to any of claims 1 or 2, wherein the massive tire body (4) consists of a resilient and elastic material.

4. Tire according to any of claims 1 to 3, wherein the elastic material is a closed cell foam.

5. Tire according to any of claims 1 to 4, wherein the volume of the cable channel (5) is at most 25 vol. % of the total volume of the tire body (4), preferably between 5 and 15 vol.%.

6. Tire according to any of claims 1 to 5, wherein the pull cable channel (5) has a reinforced wall (7), in particular a reinforced wall (7) comprising a hollow wound metal wire spiral.

7. Tire according to any one of claims 1 to 6, further comprising a T-shaped element (12) comprising a protruding leg (13) guiding the ends (34a, 34b) of the pull cable (6) to outside the tire body (4).

8. Tire according to claim 7, mounted on a rim (2) containing a valve hole, the ends of the pull cable (34a, 34b) having been secured to the rim (2) through the valve hole.

9. Tire according to any of claims 1 to 6, wherein the pull cable (6) is a screw clamp (31) containing a captive screw (32) and comprising a band (30) having two ends (30a, 30b), into which band (30) a grooved pattern has been cut or pressed corresponding to the screw thread of the captive screw (32).

10. Structure comprising a tire according to any one of claims 1 to 8 mounted around a wheel rim (1) having a rim bottom (2) having a rim bottom outer diameter D_{Vb} and rim edges (3) having a rim edge outer diameter D_{Vr}, which tire comprises an annular tire body (4) which, apart from a narrow annular cable channel (5), is substantially massive, which cable channel is equipped for leading through a pull cable (6,30) intended for tightening the tire body (4) around to the rim on mounting, the cross section of the substantially massive tire body (4), when the pull cable (6, 30) is in non-tightened position, being essentially round or oval and the inner diameter D_{B} of the tire body, when the pull cable is in non-tightened position, being substantially larger than the rim bottom outer diameter D_{Vb}.

11. Structure, according to claim 10, wherein the inner diameter D_{B} of the tire body, when the pull cable is in non-tightened position, is at most 5% larger than the rim bottom outer diameter D_{Vb}.

12. Structure comprising a tire according to any one of claims 1 to 8 comprising an annular massive tire body (4), mounted around a wheel rim (1) having a rim bottom (2) having a rim bottom outer diameter D_{Vb} and rim edges (3) having a rim edge outer diameter D_{Vr}, wherein the annular tire body contains an annular cable channel (5), which cable channel contains a tensioned pull cable (6,30) that tightens the tire body (4) around to the rim (2) and wherein the inner diameter D_{B} of the tire body (4) ranges from the rim bottom outer diameter D_{Vb} up to 1 to 5 mm larger than the rim bottom outer diameter D_{Vb}.

13. Structure according to claim 12 comprising a tire according to claim 8, wherein the rim bottom (2) has a valve hole and the ends (34a, 34b) of the pull cable (6) having been secured to the rim (1) through the valve hole.

14. Structure according to claim 12 comprising a tire according to claim 9, wherein the pull cable (30) has been tightened around the rim by the screw clamp (31) .

15. Structure according to any one of claims 12 to 14, wherein the position of the pull cable (6, 30) will range from 10 mm above the rim bottom (2) to 5 mm above the rim edges (3).

## Patentansprüche

1. Reifen, umfassend einen ringförmigen massiven Reifenkörper (4) mit einem im Wesentlichen runden oder ovalen Querschnitt, der ein Zentrum M_{B} aufweist, und mit einem Außenumfang Co, der ein Profil bildet, und einem Innenumfang C_{I}, der zum Zentrum M_{B} des ringförmigen Körpers zeigt, wobei der Körper einen longitudinalen Zugkabelkanal (5) beinhaltet, wobei der Kanal ein Zugkabel (6) beinhaltet und einen Querschnitt mit einem Zentrum M_{K} aufweist, **dadurch gekennzeichnet, dass** die Distanz zwischen M_{K} und dem Innenumfang C_{I}, gemessen entlang einer Linie, die M_{K} und M_{B} verbindet, zwischen 7 und 20 mm beträgt.

2. Reifen nach Anspruch 1, **dadurch gekennzeichnet, dass** die Distanz zwischen M_{K} und dem Innenumfang C_{I} zwischen 8 und 18 mm beträgt.

3. Reifen nach einem der Ansprüche 1 oder 2, wobei der massive Reifenkörper (4) aus einem nachgiebigen und elastischen Material besteht.

4. Reifen nach einem der Ansprüche 1 bis 3, wobei das elastische Material ein geschlossenporiger Schaumstoff ist.

5. Reifen nach einem der Ansprüche 1 bis 4, wobei das Volumen des Kabelkanals (5) maximal 25 Vol.-% des Gesamtvolumens des Reifenkörpers (4) beträgt, vorzugsweise zwischen 5 und 15 Vol.-%.

6. Reifen nach einem der Ansprüche 1 bis 5, wobei der Zugkabelkanal (5) eine verstärkte Wand (7) aufweist, insbesondere eine verstärkte Wand (7), die eine hohle gewundene Metalldrahtspirale umfasst.

7. Reifen nach einem der Ansprüche 1 bis 6, ferner umfassend ein T-förmiges Element (12), das ein vorstehendes Bein (13) umfasst, das die Enden (34a, 34b) des Zugkabels (6) zum Äußeren des Reifenkörpers (4) lenkt.

8. Reifen nach Anspruch 7, der auf einer Felge (2) montiert ist, die ein Ventilloch beinhaltet, wobei die Enden des Zugkabels (34a, 34b) durch das Ventilloch an der Felge (2) gesichert wurden.

9. Reifen nach einem der Ansprüche 1 bis 6, wobei das Zugkabel (6) eine Schraubzwinge (31) ist, die eine unverlierbare Schraube (32) beinhaltet und ein Band (30) mit zwei Enden (30a, 30b) umfasst, wobei in das Band (30) ein geriffeltes Muster geschnitten oder geprägt wurde, das dem Schraubengewinde der unverlierbaren Schraube (32) entspricht.

10. Struktur, die einen Reifen nach einem der Ansprüche 1 bis 8 umfasst, der um eine Radfelge (1) mit einem Felgenboden (2) mit einem Felgenboden-Außendurchmesser D_{Vb} und Felgenkanten (3) mit einem Felgenkanten-Außendurchmesser D_{Vr} montiert ist, wobei der Reifen einen ringförmigen Reifenkörper (4) umfasst, der abgesehen von einem engen ringförmigen Kabelkanal (5) im Wesentlichen massiv ist, wobei der Kabelkanal zum Durchführen eines Zugkabels (6, 30) ausgestattet ist, das zum Festziehen des Reifenkörpers (4) beim Montieren auf die Felge herum gedacht ist, wobei der Querschnitt des im Wesentlichen massiven Reifenkörpers (4), wenn sich das Zugkabel (6, 30) in der nicht festgezogenen Position befindet, im Wesentlichen rund oder oval ist und der Innendurchmesser D_{B} des Reifenkörpers, wenn sich das Zugkabel in der nicht festgezogenen Position befindet, im Wesentlichen größer als der Felgenboden-Außendurchmesser D_{Vb} ist.

11. Struktur nach Anspruch 10, wobei der Innendurchmesser D_{B} des Reifenkörpers, wenn sich das Zugkabel in der nicht festgezogenen Position befindet, maximal 5 % größer als der Felgenboden-Außendurchmesser D_{Vb} ist.

12. Struktur, die einen Reifen nach einem der Ansprüche 1 bis 8 umfasst, umfassend einen ringförmigen massiven Reifenkörper (4), der um eine Reifenfelge (1) mit einem Felgenboden (2) mit einem Felgenboden-Außendurchmesser D_{Vb} und Felgenkanten (3) mit einem Felgenkanten-Außendurchmesser D_{Vr} montiert ist, wobei der ringförmige Reifenkörper einen ringförmigen Kabelkanal (5) beinhaltet, wobei der Kabelkanal ein zugbeanspruchtes Zugkabel (6, 30) beinhaltet, das den Reifenkörper (4) auf die Felge (2) herum festzieht, und wobei sich der Innendurchmesser D_{B} des Reifenkörpers (4) in einem Bereich vom Felgenboden-Außendurchmesser D_{Vb} bis zu 1 bis 5 mm größer als der Felgenboden-Außendurchmesser D_{Vb} bewegt.

13. Struktur nach Anspruch 12, die einen Reifen nach Anspruch 8 umfasst, wobei der Felgenboden (2) ein Ventilloch aufweist und die Enden (34a, 34b) des Zugkabels (6) durch das Ventilloch an der Felge (1) gesichert wurden.

14. Struktur nach Anspruch 12, die einen Reifen nach Anspruch 9 umfasst, wobei das Zugkabel (30) durch die Schraubzwinge (31) um die Felge festgezogen wurde.

15. Struktur nach einem der Ansprüche 12 bis 14, wobei sich die Position des Zugkabels (6, 30) in einem Bereich von 10 mm über dem Felgenboden (2) bis zu 5 mm über den Felgenkanten (3) erstrecken wird.

## Revendications

1. Pneu, comprenant un corps de pneu solide annulaire (4) ayant une section transversale essentiellement ronde ou ovale ayant un centre M_{B}, et ayant une circonférence externe Co formant une bande de roulement et une circonférence interne C_{I} faisant face au centre M_{B} du corps annulaire, le corps contenant un canal de câble de traction longitudinal (5), le canal contenant un câble de traction (6) et ayant une section transversale ayant un centre M_{K}, **caractérisé par le fait que** la distance entre M_{K} et la circonférence interne C_{I} est comprise entre 7 et 20 mm, mesurée le long d'une ligne reliant M_{K} et M_{B}.

2. Pneu selon la revendication 1, **caractérisé par le fait que** la distance entre M_{K} et la circonférence interne C_{I} est comprise entre 8 et 18 mm.

3. Pneu selon l'une quelconque des revendications 1 ou 2, dans lequel le corps de pneu solide (4) est constitué d'un matériau résistant et élastique.

4. Pneu selon l'une quelconque des revendications 1 à 3, dans lequel le matériau élastique est une mousse à cellules fermées.

5. Pneu selon l'une quelconque des revendications 1 à 4, dans lequel le volume du canal de câble (5) est d'au plus 25 % en volume du volume total du corps de pneu (4), de préférence entre 5 et 15 % en volume.

6. Pneu selon l'une quelconque des revendications 1 à 5, dans lequel le canal de câble de traction (5) a une paroi renforcée (7), en particulier une paroi renforcée (7) comprenant une spirale de fil métallique enroulée creuse.

7. Pneu selon l'une quelconque des revendications 1 à 6, comprenant en outre un élément en forme de T (12) comprenant une patte en saillie (13) guidant les extrémités (34a, 34b) du câble de traction (6) vers l'extérieur du corps de pneu (4).

8. Pneu selon la revendication 7, monté sur une jante (2) contenant un trou de valve, les extrémités du câble de traction (34a, 34b) ayant été fixées à la jante (2) à travers le trou de valve.

9. Pneu selon l'une quelconque des revendications 1 à 6, dans lequel le câble de traction (6) est une vis de serrage (31) contenant une vis captive (32) et comprenant une bande (30) ayant deux extrémités (30a, 30b), bande (30) dans laquelle un motif rainuré a été découpé ou pressé de manière correspondante au filetage de la vis captive (32).

10. Structure comprenant un pneu selon l'une quelconque des revendications 1 à 8, montée autour d'une jante de roue (1) ayant un fond de jante (2) ayant un diamètre externe de fond de jante D_{Vb} et des bords de jante (3) ayant un diamètre externe de bord de jante D_{Vr}, lequel pneu comprend un corps de pneu annulaire (4) qui, à distance d'un canal de câble annulaire étroit (5), est sensiblement solide, lequel canal de câble est prévu pour acheminer un câble de traction (6, 30) destiné à serrer le corps de pneu (4) autour de la jante au montage, la section transversale du corps de pneu sensiblement solide (4), lorsque le câble de traction (6, 30) est en position non serrée, étant essentiellement ronde ou ovale et le diamètre interne D_{B} du corps de pneu, lorsque le câble de traction est en position non serrée, étant sensiblement plus grand que le diamètre externe de fond de jante D_{Vb}.

11. Structure selon la revendication 10, dans laquelle le diamètre interne D_{B} du corps de pneu, lorsque le câble de traction est en position non serrée, est au plus 5 % plus grand que le diamètre externe de fond de jante D_{Vb}.

12. Structure comprenant un pneu selon l'une quelconque des revendications 1 à 8, comprenant un corps de pneu solide annulaire (4), montée autour d'une jante de roue (1) ayant un fond de jante (2) ayant un diamètre externe de fond de jante D_{Vb} et des bords de jante (3) ayant un diamètre externe de bord de jante D_{Vr}, le corps de pneu annulaire contenant un canal de câble annulaire (5), lequel canal de câble contient un câble de traction tendu (6, 30) qui serre le corps de pneu (4) autour de la jante (2), et le diamètre interne D_{B} du corps de pneu (4) se situant dans la plage allant du diamètre externe de fond de jante D_{Vb} jusqu'à 1 à 5 mm plus grand que le diamètre externe de fond de jante D_{Vb}.

13. Structure selon la revendication 12 comprenant un pneu selon la revendication 8, dans laquelle le fond de jante (2) a un trou de valve et les extrémités (34a, 34b) du câble de traction (6) ayant été fixées à la jante (1) à travers le trou de valve.

14. Structure selon la revendication 12 comprenant un pneu selon la revendication 9, dans laquelle le câble de traction (30) a été serré autour de la jante par la vis de serrage (31).

15. Structure selon l'une quelconque des revendications 12 à 14, dans laquelle la position du câble de traction (6, 30) se situera dans la plage allant de 10 mm au-dessus du fond de jante (2) à 5 mm au-dessus des bords de jante (3).
